# EUROPÄISCHE PATENTSCHRIFT

(11) **EP 1 947 750 B1**
(45) Veröffentlichungstag und Bekanntmachung des Hinweises auf die Patenterteilung: **03.07.2013**
(21) Anmeldenummer: 07024138.5
(22) Anmeldetag: 12.12.2007
(51) Int. Cl.: H02G 3/32, F16L 3/233

(54) **Befestigungsvorrichtung für Kabel**
Affixing device for cables
Dispositif de fixation pour câbles

(30) Priorität: 22.01.2007 DE 202007000938 U
(43) Veröffentlichungstag der Anmeldung: 23.07.2008
(73) Patentinhaber: TRW Automotive Electronics & Components GmbH, 78315 Radolfzell (DE)
(72) Erfinder: Elsner, Markus, 67657 Kaiserslautern (DE)
(74) Vertreter: Prinz & Partner

(56) Entgegenhaltungen:
- DE-A1- 10 332 376
- DE-U1-202006 001 743
- GB-A- 1 005 269
- JP-A- 11 196 522
- US-A- 3 113 754
- US-A- 3 632 070

## Beschreibung

Die Erfindung betrifft eine Befestigungsvorrichtung für Kabel.

Insbesondere in der Automobilindustrie sind unterschiedliche Befestigungsvorrichtungen bekannt, mit denen einzelne Kabel oder Kabelbäume z.B. an einem Blechteil fixiert werden können. Zur Anbringung der Befestigungsvorrichtung am Blechteil, oder allgemein an einem Basisteil, weist dieses in der Regel eine oder mehrere Öffnungen auf, in die Rastelemente der Befestigungsvorrichtung eingedrückt werden. Bei der Kabelverlegung besteht unter Umständen ein Bedarf nach einer Fixierung von Kabeln an oder entlang einer Kante eines Basisteils.

Aus der JP-11-196522 A ist eine Befestigungsvorrichtung für ein geriffeltes Rohr bekannt. Die Vorrichtung umfasst ein Befestigungsteil zur Anbringung der Befestigungsvorrichtung an einer Befestigungsstrebe eines Basisteils sowie ein Kabelbandschloss und ein in das Kabelbandschloss einführbares Kabelband.

Die DE 20 2006 001 743 U1 zeigt einen Clip zum Festlegen eines Kabels, der an einer Kante angebracht werden kann. Der Clip besteht aus einem U-förmigen Körper, zwischen dessen Schenkeln ein Federelement angeordnet ist. Die auf die Basis des Körpers weisende Enden des Federelements gelangen beim Aufschieben auf die Kante mit dieser federnd in Eingriff und halten den Clip auf der Kante.

Die US 3 113 754 A betrifft eine Schelle zum Halten von Drähten, Rohren, Stäben oder dergleichen an einer Platte. Die Schelle besteht aus einer Federmetallklammer zur Befestigung an der Platte und aus einem Halteteil für die zu haltenden Gegenstände. Ein Schenkel der Klammer und ein Schenkel des Halteteils sind gleich verlaufend angeordnet, und der Halteteil ist durch einen Rastzahnverschluss schließbar. Der Halteteil liegt mit einer elastisch nachgiebigen Fläche an den zu haltenden Gegenständen an.

Eine Klammer zu Befestigung eines Drahtbündels oder dergleichen, das von einem Kabelbinder zusammengehalten wird, ist aus der US 3 632 070 A bekannt. Die Klammer umfasst eine Plattform zur Befestigung an einem Träger.

In der US 1 005 269 A ist eine Haltevorrichtung zur Befestigung eines Gegenstands an einem durchlochten Träger gezeigt. Die Haltevorrichtung weist eine Basis mit an einer ihrer Flächen angeordneten Mitteln zum Eingreifen in eine der Durchlochungen des Trägers auf. Ein oberhalb angeordnetes Anlageteil mit einer Durchgangsöffnung weist ein sich seitlich von der Basis weg erstreckendes bandförmiges Teil mit einer Reihe von im Längsabstand zueinander liegenden, sich in Querrichtung erstreckenden Rippen auf.

Die DE 103 32 376 A1 betrifft eine Vorrichtung zur Verbindung eines Halteelements zum Halten eines Leitungs- und/oder Kabelstranges an zumindest einem Trägerelement an einem Fahrzeug. Das Halteelement ist im Querschnitt U-förmig ausgebildet und weist zwei gegenüberliegende Klemmschenkel auf, zwischen denen sich das Trägerelement im befestigten Zustand befindet. Zumindest ein Befestigungsabschnitt des Trägerelements kann bei der Befestigung des Halteelements durch zumindest einen Klemmschenkel verformt werden.

Die Erfindung schafft eine kostengünstig herstellbare und einfach zu montierende Befestigungsvorrichtung, die eine sehr zuverlässige Kabelfixierung relativ zu einer Kante eines Basisteils ermöglicht.

Gemäß der Erfindung umfaßt eine Befestigungsvorrichtung für Kabel einen Kantenklippteil zur Anbringung der Befestigungsvorrichtung an einer Kante eines Basisteils, ein in den Kantenklippteil einsetzbares Metallteil, ein Kabelbandschloß und ein in das Kabelbandschloß einführbares Kabelband, wobei das Metallteil eine in das Kabelbandschloß hineinragende Zunge aufweist, die bei eingeführtem Kabelband am Kabelband angreift. Die erfindungsgemäße Befestigungsvorrichtung wird - mit oder ohne eingebundenem Kabel - einfach auf die Kante des Basisteils aufgesteckt. Die Metallzunge, die nach Einführung des Kabelbands in das Kabelbandschloß am Kabelband angreift, sorgt für eine im Vergleich zu Kabelbindern mit einem herkömmlichen Kabelbandrastmechanismus aus reinem Kunststoff für eine deutlich erhöhte Auszugskraft, d.h. das Kabelband ist besser gegen unbeabsichtigten Auszug gesichert. Dies läßt sich dadurch erklären, daß bei herkömmlichen Kabelbindern Kabelband und Kabelbandschloß aus dem gleichen Kunststoff gefertigt werden, der einerseits eine ausreichend leichte Verbiegung des Kabelbands erlaubt, andererseits aber gerade aufgrund dieser Nachgiebigkeit die Auszugskraft begrenzt.

Vorzugsweise sind der Kantenklippteil, das Kabelbandschloß und das Kabelband einstückig aus (demselben) Kunststoff hergestellt, so daß die Zahl der Einzelteile der Befestigungsvorrichtung auf ein Minimum reduziert ist. Nur das Metallteil wird separat gefertigt.

Für einen besonders einfachen Zusammenbau der Befestigungsvorrichtung weist der Kantenklippteil eine Öffnung auf, durch die das Metallteil in den Kantenklippteil eingesetzt werden kann. Die Öffnung ist vorzugsweise auf der Seite des Kantenklippteils vorgesehen, die einem Aufsteckspalt des Kantenklippteils entgegengesetzt ist.

Um einem unbeabsichtigten Abzug der Befestigungsvorrichtung von der Kante des Basisteils effektiv entgegenzuwirken, weist das Metallteil wenigstens eine Blechkralle auf, die bei aufgesteckter Befestigungsvorrichtung direkt am Basisteil angreift. Das Metallteil hat in diesem Fall eine Doppelfunktion: zum einen hält die Zunge das Kabelband fest, zum anderen arretiert die Blechkralle die Befestigungsvorrichtung am Basisteil.

Zur Positionierung und zur sicheren Befestigung des Metallteils im Kantenklippteil weist das Metallteil wenigstens einen Positionierabschnitt, der das Metallteil im Kantenklippteil in einer definierten Lage hält, bzw. wenigstens einen Rasthaken auf, der in ein korrespondierendes Rastfenster des Kantenklippteils einrastet.

Um den Einschubweg für das Metallteil im Kantenklippteil zu begrenzen, weist der Kantenklippteil einen Halteabschnitt auf, der einen Anschlag für das Metallteil bildet. Vorzugsweise ist der Halteabschnitt des Kantenklippteils hakenartig ausgebildet, und ein Abschnitt des Metallteils verrastet hinter dem hakenartigen Halteabschnitt.

Für bestimmte Anwendungen ist es vorteilhaft, daß sich das Kabelband vor Einführung in das Kabelbandschloß im wesentlichen senkrecht zu einer Aufsteckrichtung erstreckt, die durch den Kantenklippteil definiert ist.

Weitere Merkmale und Vorteile der Erfindung ergeben sich aus der nachfolgenden Beschreibung einer bevorzugten Ausführungsform unter Bezugnahme auf die beigefügten Zeichnungen. In den Zeichnungen zeigen:
Figur 1 eine Explosionsdarstellung einer erfindungsgemäßen Befestigungsvorrichtung;
Figur 2 eine perspektivische Ansicht des Kantenklippteils;
Figur 3 eine perspektivische Ansicht des Metallteils;
Figur 4 eine perspektivische Ansicht des Kantenklippteils und des Metallteils;
Figuren 5a, 5b, 5c verschiedene perspektivische Ansichten des Kantenklippteils mit eingesetzten Metallteil;
Figur 6 eine Schnittansicht der Befestigungsvorrichtung mit eingesetztem Metallteil und eingeführtem Kabelband; und
Figur 7 eine Seitenansicht der aufgesteckten Befestigungsvorrichtung.

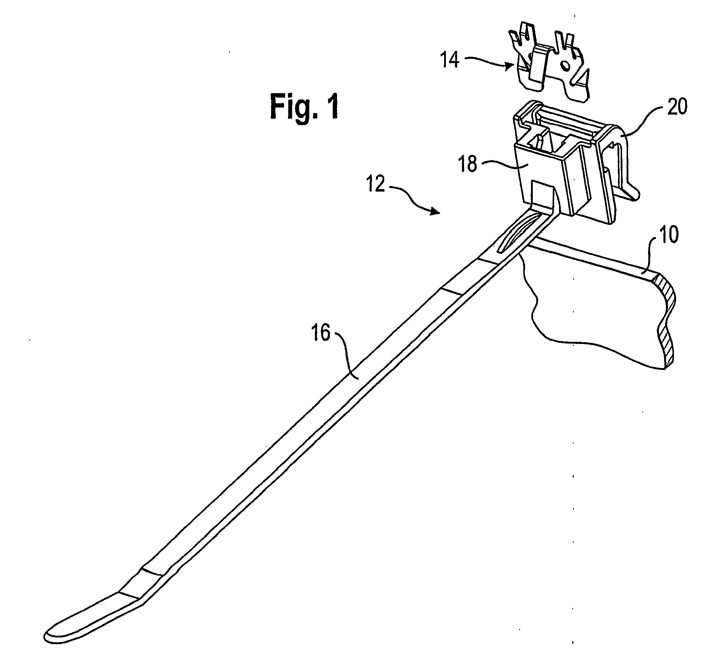

In Figur 1 sind die Einzelteile einer erfindungsgemäßen Befestigungsvorrichtung gezeigt, die zur Fixierung eines Kabels oder Kabelbaums an einer Montagekante 10 eines Basisteils dient. Das Basisteil kann z.B. ein Blechteil oder ein Karosserieteil eines Kraftfahrzeugs sein. Neben einem Kunststoffteil 12, dessen Aufbau noch genauer erläutert wird, weist die Befestigungsvorrichtung noch ein Metallteil 14 auf.

Das einstückig ausgeführte Kunststoffteil 12 kann in drei Funktionsabschnitte unterteilt werden: ein Kabelband 16, das um das bzw. die zu fixierenden Kabel gelegt wird; ein Kabelbandschloß 18, in das das Kabelband 16 zur Fixierung des bzw. der Kabel eingeführt wird; und einen Kantenklippteil 20 zum Anbringen der Befestigungsvorrichtung an der Kante 10 des Basisteils.

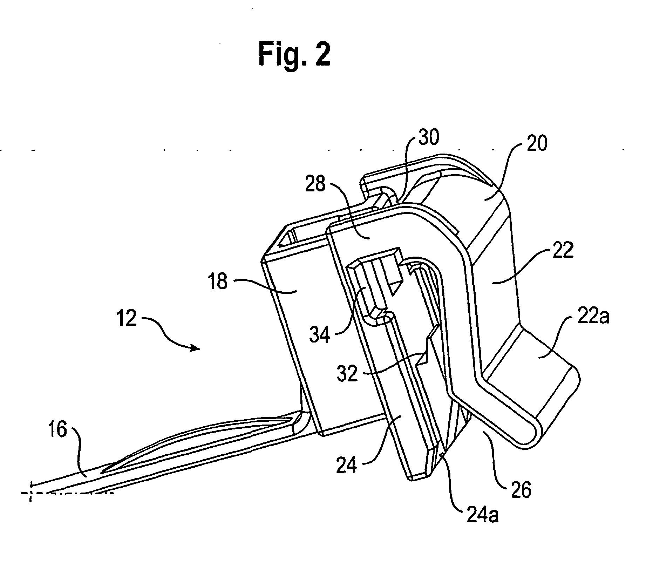

In Figur 2 sind weitere Details des Kunststoffteils 12 zu erkennen. Das Kabelbandschloß 18 ist im wesentlichen durch einen beidseitig offenen Schacht gebildet, von dem sich das Kabelband 16 im wesentlichen senkrecht erstreckt. Auf der anderen Seite des Kabelbandschlosses 18 schließt sich der U-förmige Kantenklippteil 20 mit zwei Schenkeln 22, 24 an. Die Schenkel 22, 24 definieren einen Aufsteckspalt 26 und sind auf der entgegengesetzten Seite durch Verbindungsabschnitte 28 miteinander verbunden, die als Anschlag für die Kante 10 des Basisteils dienen. Der dem Kabelbandschloß 18 abgewandte erste Schenkel 22 weist einen abgewinkelten Abschnitt 22a auf, der zusammen mit dem abgeschrägten Ende 24a des zweiten Schenkels 24 das Aufstecken auf die Kante 10 erleichtert. Außerdem ist der erste Schenkel 22 so ausgebildet, daß er elastisch auslenkbar ist und nach dem Aufstecken auf die Kante 10 eine Federkraft auf diese ausübt.

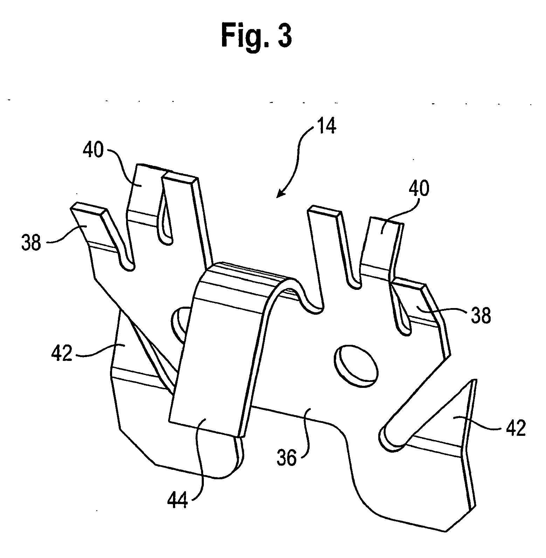

Des weiteren weist das Kunststoffteil 12 auf der dem Aufsteckspalt 26 entgegengesetzten Seite eine Öffnung 30 auf, durch die das in Figur 3 einzeln gezeigte Metallteil 14 in den Kantenklippteil 20 eingesetzt werden kann. Der Kantenklippteil 20 ist speziell auf das Metallteil 14 abgestimmt und hat einen hakenartig ausgebildeten Halteabschnitt 32, der als Anschlag für das Metallteil 14 dient, sowie zwei Rastfenster 34, deren Bedeutung noch erläutert wird.

Das Metallteil 14 (siehe Figur 3) ist aus einer flachen Metallplatte geformt und weist einen Basisabschnitt 36 auf, von dem sich zwei in eine erste Richtung geneigte Rasthaken 38, zwei in eine entgegengesetzte zweite Richtung geneigte Positionierabschnitte 40 und zwei Blechkrallen 42 erstrecken, die in die gleiche Richtung wie die Positionierabschnitte 40 geneigt sind. Ferner weist das Metallteil 14 eine in der ersten Richtung umgebogene Zunge 44 auf.

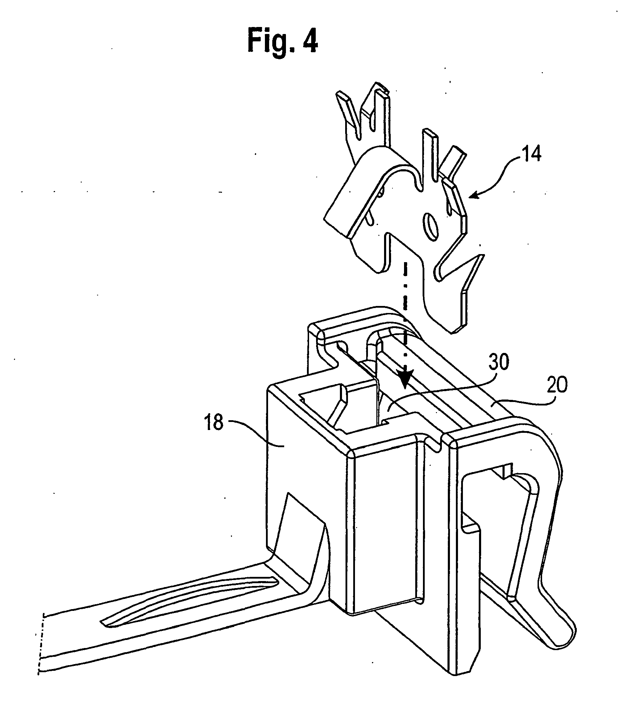

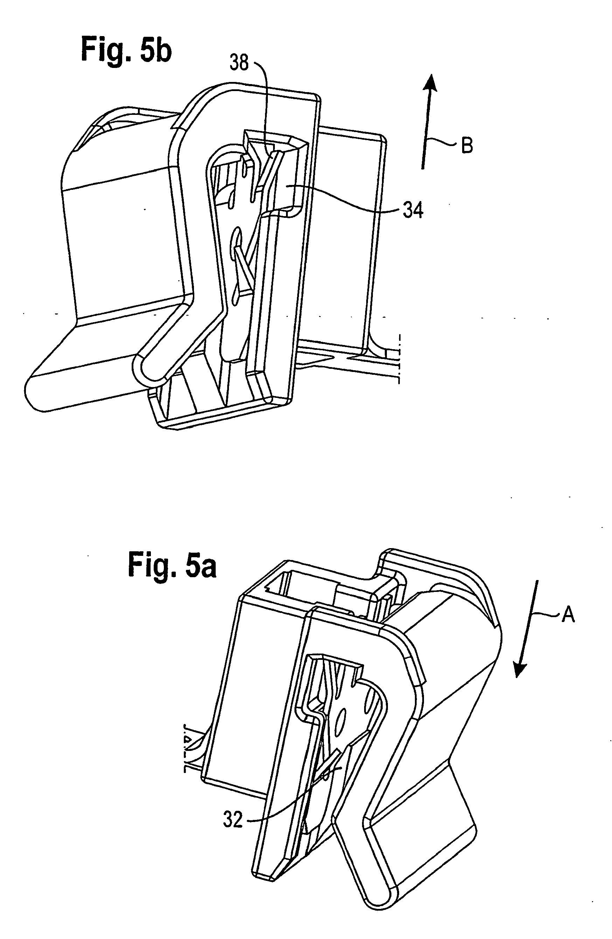

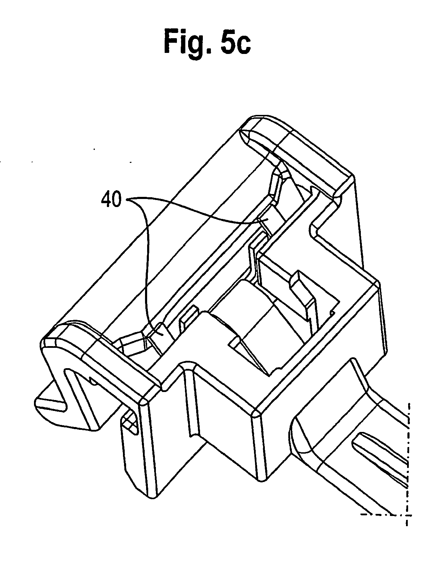

In Figur 4 ist gezeigt, wie das Metallteil 14 durch die Öffnung 30 in den Kantenklippteil 20 des Kunststoffteils 12 eingesetzt wird. Die Figuren 5a, 5b und 5c zeigen das Kunststoffteil 12 mit vollständig eingesetztem Metallteil 14. Beim Einschieben des Metallteils 14 dient der Halteabschnitt 32 des Kantenklippteils 20 als Anschlag, und der Basisabschnitt 36 des Metallteil 14 verrastet hinter dem hakenartigen ausgebildeten Halteabschnitt 32 (Figur 5a). Dadurch wird die Bewegung des Metallteils 14 in Einsetzrichtung A begrenzt.

Außerdem rasten beim Einschieben des Metallteils 14 die Rasthaken 38 in die Rastfenster 34 des Kunststoffteils 12 ein, so daß das Metallteil 14 auch bezüglich der der Einsetzrichtung A entgegengesetzten Richtung B festsitzt (Figur 5b). Die Positionierabschnitte 40 drücken das Metallteil 14 im Kantenklippteil 20 in eine vorbestimmte Lage und sorgen dafür, daß das Metallteil 14 diese definierte Lage beibehält (Figur 5c).

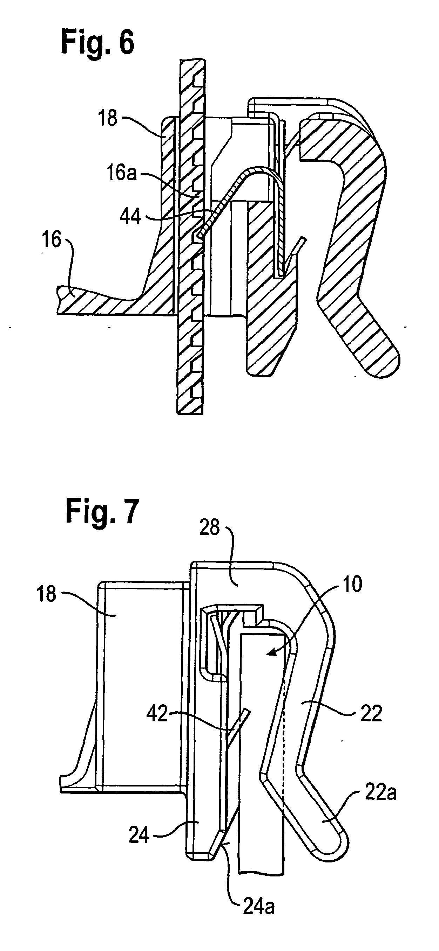

In Figur 6 ist zu erkennen, daß die Zunge 44 des Metallteils 14 in das Kabelbandschloß 18 hineinragt und direkt am Kabelband 16 angreift, wenn dieses in das Kabelbandschloß 18 eingeführt ist. Das Kabelband 16 weist in bekannter Weise ein sägezahnartiges Profil 16a auf. Aufgrund der im Vergleich zum Material des Kunststoffteils 12 viel höheren Steifigkeit der Metallzunge 44 wird auch bei sehr hohen Auszugskräften das Kabelband 16 noch sicher im Kabelbandschloß 18 gehalten.

Figur 7 zeigt schließlich die Befestigungsvorrichtung, nachdem sie auf die Kante 10 des Basisteils aufgesteckt wurde (wobei der erste Schenkel 22 des Kantenklippteils 20 im nicht ausgelenkten Zustand dargestellt ist). Die vom Kabelbandschloß 18 weggewandten Blechkrallen 42 greifen unmittelbar an der dem zweiten Schenkel 24 zugewandten Seite des Basisteils an und verhindern so einen unbeabsichtigten Abzug der Befestigungsvorrichtung von der Kante 10 des Basisteils.

Bei der Kabelverlegung kann den Umständen entsprechend entweder zuerst das Kabel bzw. der Kabelbaum durch Umlegen und Einführen des Kabelbands 16 in das Kabelbandschloß 18 an der Befestigungsvorrichtung fixiert werden, oder es wird zuerst die Befestigungsvorrichtung durch Aufstecken auf die Kante 10 am Basisteil angebracht.

## Patentansprüche

1. Befestigungsvorrichtung für Kabel, mit einem Kantenklippteil (20) zur Anbringung der Befestigungsvorrichtung an einer Kante (10) eines Basisteils, einem in den Kantenklippteil (20) einsetzbaren Metallteil (14), einem Kabelbandschloß (18) und einem in das Kabelbandschloß (18) einführbaren Kabelband (16), wobei das Metallteil (14) eine in das Kabelbandschloß (18) hineinragende Zunge (44) aufweist, die bei eingeführtem Kabelband (16) am Kabelband (16) angreift.

2. Befestigungsvorrichtung nach Anspruch 1, **dadurch gekennzeichnet, daß** der Kantenklippteil (20), das Kabelbandschloß (18) und das Kabelband (16) einstückig aus Kunststoff hergestellt sind.

3. Befestigungsvorrichtung nach Anspruch 1 oder 2, **dadurch gekennzeichnet, daß** der Kantenklippteil (20) eine Öffnung (30) aufweist, durch die das Metallteil (14) in den Kantenklippteil (20) eingesetzt werden kann.

4. Befestigungsvorrichtung nach Anspruch 3, **dadurch gekennzeichnet, daß** der Kantenklippteil (20) auf einer Seite einen Aufsteckspalt (26) aufweist und die Öffnung (30) für das Metallteil (14) auf der entgegengesetzten Seite vorgesehen ist.

5. Befestigungsvorrichtung nach einem der vorhergehenden Ansprüche, **dadurch gekennzeichnet, daß** das Metallteil (14) wenigstens eine Blechkralle (42) aufweist, die bei aufgesteckter Befestigungsvorrichtung direkt am Basisteil angreift.

6. Befestigungsvorrichtung nach einem der vorhergehenden Ansprüche, **dadurch gekennzeichnet, daß** das Metallteil (14) wenigstens einen Positionierabschnitt (40) aufweist, der das Metallteil (14) im Kantenklippteil (20) in einer definierten Lage hält.

7. Befestigungsvorrichtung nach einem der vorhergehenden Ansprüche, **dadurch gekennzeichnet, daß** das Metallteil (14) wenigstens einen Rasthaken (38) aufweist, der in ein korrespondierendes Rastfenster (34) des Kantenklippteils (20) einrastet.

8. Befestigungsvorrichtung nach einem der vorhergehenden Ansprüche, **dadurch gekennzeichnet, daß** der Kantenklippteil (20) einen Halteabschnitt (32) aufweist, der einen Anschlag für das Metallteil (14) bildet.

9. Befestigungsvorrichtung nach Anspruch 8, **dadurch gekennzeichnet, daß** der Halteabschnitt (32) des Kantenklippteils (20) hakenartig ausgebildet ist und ein Abschnitt (36) des Metallteils (14) hinter dem hakenartigen Halteabschnitt (32) verrastet.

10. Befestigungsvorrichtung nach einem der vorhergehenden Ansprüche, **dadurch gekennzeichnet, daß** der Kantenklippteil (20) eine Aufsteckrichtung definiert und daß sich das Kabelband (16) vor Einführung in das Kabelbandschloß (18) im wesentlichen senkrecht zur Aufsteckrichtung erstreckt.

## Claims

1. A fastening device for cables, comprising an edge clip part (20) for mounting the fastening device on an edge (10) of a base part, a metal part (14) which is adapted to be inserted into the edge clip part (20), a cable tie lock (18), and a cable tie (16) which is adapted to be introduced into the cable tie lock (18), the metal part (14) having a tongue (44) which projects into the cable tie lock (18) and engages the cable tie (16) when the cable tie (16) is in the introduced condition.

2. The fastening device according to claim 1, **characterized in that** the edge clip part (20), the cable tie lock (18) and the cable tie (16) are produced integrally from plastic.

3. The fastening device according to claim 1 or 2, **characterized in that** the edge clip part (20) has an opening (30) through which the metal part (14) can be inserted into the edge clip part (20).

4. The fastening device according to claim 3, **characterized in that** the edge clip part (20) has a mounting gap (26) on one side, and the opening (30) for the metal part (14) is provided on the opposite side.

5. The fastening device according to any of the preceding claims, **characterized in that** the metal part (14) has at least one sheet metal claw (42) which directly engages the base part when the fastening device is in the mounted condition.

6. The fastening device according to any of the preceding claims, **characterized in that** the metal part (14) has at least one positioning portion (40) which holds the metal part (14) in the edge clip part (20) in a defined position.

7. The fastening device according to any of the preceding claims, **characterized in that** the metal part (14) has at least one detent hook (38) which locks in place in a corresponding detent window (34) of the edge clip part (20).

8. The fastening device according to any of the preceding claims, **characterized in that** the edge clip part (20) has a holding portion (32) which forms a stop for the metal part (14).

9. The fastening device according to claim 8, **characterized in that** the holding portion (32) of the edge clip part (20) is constructed as a hook and a portion (36) of the metal part (14) locks in place behind the hook-type holding portion (32).

10. The fastening device according to any of the preceding claims, **characterized in that** the edge clip part (20) defines a mounting direction and **in that** the cable tie (16) extends substantially perpendicularly to the mounting direction before introduction into the cable tie lock (18).

## Revendications

1. Dispositif de fixation de câble, comportant une partie pince (20) de placement sur une arête, destinée à mettre en place le dispositif de fixation sur une arête (10) d'une pièce de base, un élément métallique (14) susceptible d'être inséré dans la partie pince (20), une serrure (18) de ruban serre-câble et un ruban serre-câble (16) apte à s'introduire dans la serrure (18) de ruban serre-câble, l'élément métallique (14) présentant une languette (44) pénétrant dans la serrure (18) de ruban serre-câble et venant attaquer le ruban serre-câble (16) lorsque le ruban serre-câble (16) est introduit.

2. Dispositif de fixation selon la revendication 1, **caractérisé en ce que** la partie pince (20) de placement sur une arête, la serrure (18) de ruban serre-câble et le ruban serre-câble (16) sont réalisés d'un seul tenant en matière plastique.

3. Dispositif de fixation selon la revendication 1 ou 2, **caractérisé en ce que** la partie pince (20) de placement sur une arête présente une ouverture (30) permettant d'insérer l'élément métallique (14) dans la partie pince (20).

4. Dispositif de fixation selon la revendication 3, **caractérisé en ce que** la partie pince (20) de placement sur une arête présente un intervalle d'application (26) sur un côté, et l'ouverture (30) pour l'élément métallique est prévue sur le côté opposé.

5. Dispositif de fixation selon l'une des revendications précédentes, **caractérisé en ce que** l'élément métallique (14) comprend au moins une griffe (42) en tôle qui attaque directement la pièce de base lorsque le dispositif de fixation est appliqué.

6. Dispositif de fixation selon l'une des revendications précédentes, **caractérisé en ce que** l'élément métallique (14) comprend au moins un tronçon de positionnement (40) qui maintient l'élément métallique (14) dans une position définie dans la partie pince (20) de placement sur une arête.

7. Dispositif de fixation selon l'une des revendications précédentes, **caractérisé en ce que** l'élément métallique (14) comprend au moins un crochet d'enclenchement (38) qui vient s'enclencher dans une fenêtre d'enclenchement (34) correspondante de la partie pince (20) de placement sur une arête.

8. Dispositif de fixation selon l'une des revendications précédentes, **caractérisé en ce que** la partie pince (20) de placement sur une arête comprend un tronçon de retenue (32) qui forme une butée pour l'élément métallique (14).

9. Dispositif de fixation selon la revendication 8, **caractérisé en ce que** le tronçon de retenue (32) de la partie pince (20) de placement sur une arête est réalisé en forme de crochet, et un tronçon (36) de l'élément métallique (14) vient s'enclencher derrière le tronçon de retenue (32) en forme de crochet.

10. Dispositif de fixation selon l'une des revendications précédentes, **caractérisé en ce que** la partie pince (20) de placement sur une arête définit une direction d'application, et **en ce qu'**avant d'être introduit dans la serrure (18) de ruban serre-câble, le ruban serre-câble (16) s'étend sensiblement perpendiculairement à la direction d'application.
